# EUROPEAN PATENT APPLICATION

(11) **EP 4 722 904 A1**
(43) Date of publication of application: **08.04.2026**
(21) Application number: 24814309.1
(22) Date of filing: 23.05.2024
(51) Int. Cl.: G06F 9/451

(54) **IMAGE SIZE ADJUSTMENT METHOD AND APPARATUS, AND DEVICE, READABLE STORAGE MEDIUM AND PRODUCT**

(30) Priority: 31.05.2023 CN 202310640029
(71) Applicant: Beijing Zitiao Network Technology Co., Ltd., Beijing 100190 (CN)
(72) Inventor: CHEN, Tianqi, Beijing 100028 (CN); YANG, Maoke, Beijing 100028 (CN)
(74) Representative: Isarpatent
(86) International application number: PCT/CN2024/095039
(87) International publication number: WO 2024/245110

(57) **Abstract**

The embodiment of the disclosure provides a method, apparatus, device, readable storage medium and product of adjusting size of an image, and the method includes: displaying an image to be adjusted and a preset adjustment control, wherein the image to be adjusted comprises a background image and a decoration content; in response to a trigger operation of a user for the adjustment control, determining a target adjustment size determined by the user based on the adjustment control; performing a size adjustment operation on the background image based on the target adjustment size to obtain an adjusted background image; and obtaining a target image by determining layout information corresponding to the decoration content based on the target adjustment size, and adding the decoration content to the adjusted background image based on the layout information. Therefore, the decoration content can have a higher quality layout, and the image quality is improved.

## Description

This application claims the priority to Chinese Patent Application No. 202310640029.5, entitled "METHOD, APPARATUS, DEVICE, READABLE STORAGE MEDIUM AND PRODUCT OF ADJUSTING SIZE OF AN IMAGE" filed on May 31, 2023, the entire contents of which are incorporated herein by reference.

### FIELD

The embodiment of the present disclosure relates to the technical field of image processing, in particular to a method, apparatus, device, readable storage medium and product of adjusting size of an image.

### BACKGROUND

**In** the image generation process, the generated image size may not meet the personalized requirement of the user, and the user also needs to adjust the size of the image. For example, the user may generate a poster comprising an image material, a background, text, and a pattern decoration based on a preset image material. However, the size of the poster may not meet the personalized requirement of the user, and the user also needs to perform a size adjustment operation on the poster.

The current size adjustment operation is generally based on the target size determined by the user, and the size adjustment operation is directly performed on the image. However, when the image size adjustment is performed by using the foregoing method, the effective content in the image may be lost, resulting in poor effect of the image size adjustment.

### SUMMARY

The embodiment of the present disclosure provides a method, apparatus, device, readable storage medium and product of adjusting size of an image, which is used for solving the technical problem that image content is lost due to the current image size adjustment method.

According to a first aspect, embodiments of the present disclosure provides a method of adjusting size of an image, comprising: displaying an image to be adjusted and a preset adjustment control, wherein the image to be adjusted comprises a background image and a decoration content; in response to a trigger operation of a user for the adjustment control, determining a target adjustment size determined by the user based on the adjustment control; performing a size adjustment operation on the background image based on the target adjustment size to obtain an adjusted background image; and obtaining a target image by determining layout information corresponding to the decoration content based on the target adjustment size, and adding the decoration content to the adjusted background image based on the layout information.

According to a second aspect, embodiments of the present disclosure provides an apparatus for adjusting size of an image, comprising: a display module configured to display an image to be adjusted and a preset adjustment control, wherein the image to be adjusted comprises a background image and a decoration content; a determining module configured to, in response to a trigger operation of a user for the adjustment control, determine a target adjustment size determined by the user based on the adjustment control; an adjusting module configured to perform a size adjustment operation on the background image based on the target adjustment size to obtain an adjusted background image; and an adding module configured to obtain a target image by determining layout information corresponding to the decoration content based on the target adjustment size, and adding the decoration content to the adjusted background image based on the layout information.

According to a third aspect, embodiments of the present disclosure provides an electronic device, comprising: a processor and a memory; the memory storing computer executable instructions; and the processor executing the computer-executable instructions stored in the memory, such that the at least one processor executes the method of adjusting size of an image according to the first aspect and various possible designs of the first aspect.

According to a fourth aspect, embodiments of the present disclosure provide a computer-readable storage medium, wherein the computer-readable storage medium stores computer-executable instructions, and the computer-executable instructions when executed by the processor, implement the method of adjusting size of an image according to the first aspect and the various possible designs of the first aspect.

According to a fifth aspect, embodiments of the present disclosure provide a computer program product, comprising a computer program, wherein the computer program when executed by a processor, implements the method of adjusting size of an image according to the first aspect and various possible designs of the first aspect.

### BRIEF DESCRIPTION OF DRAWINGS

**In** order to more clearly illustrate the embodiments of the present disclosure or the technical solutions in the prior art, the accompanying drawings used in the description of the embodiments or the prior art will be briefly introduced below, and it will be apparent that the drawings in the following description are some embodiments of the present disclosure, and those skilled in the art may also obtain other drawings according to these drawings without creative labor.
**FIG.** 1 is a schematic flowchart of a method of adjusting size of an image according to an embodiment of the present disclosure;
**FIG.** 2 is a schematic diagram of interface interaction according to an embodiment of the present disclosure;
**FIG.** 3 is a schematic flowchart of a method of adjusting size of an image according to yet another embodiment of the present disclosure;
**FIG.** 4 is a schematic diagram of image cropping according to an embodiment of the present disclosure;
**FIG.** 5 is a schematic flowchart of a method of adjusting size of an image according to yet another embodiment of the present disclosure;
**FIG.** 6 is a schematic structural diagram of an apparatus for adjusting size of an image according to an embodiment of the present disclosure;
**FIG.** 7 is a schematic structural diagram of an electronic device 700 according to an embodiment of the present disclosure.

### DETAILED DESCRIPTION

**In** order to make the objectives, technical solutions and advantages of the embodiments of the present disclosure clearer, the technical solutions in the embodiments of the present disclosure will be clearly and completely described below with reference to the accompanying drawings in the embodiments of the present disclosure. Apparently, the described embodiments are a part of the embodiments of the present disclosure, rather than all of the embodiments. All other embodiments obtained by those skilled in the art based on the embodiments of the present disclosure without creative efforts shall fall within the scope of the present disclosure.

In order to solve the technical problem of image content lost caused by the current image size adjustment method, the present disclosure provides a method, apparatus, device, readable storage medium and product of adjusting size of an image.

It should be noted that the method, apparatus, device, readable storage medium and product of adjusting size of an image provided by the present disclosure may be applied to any application scenario for adjusting size of an image.

Current image size adjustment methods generally perform size adjustment operations on images randomly based on an adjustment size determined by a user. Alternatively, the size adjustment operation is performed according to the cropping area manually determined by the user. However, performing size adjustment of an image adopting the first manner may cause loss of text and decoration content in the image, and affect the image quality. When the image size adjustment is performed adopting the second manner, manual operation of the user is required, the operation is cumbersome, and the accuracy is not high, and the user experience is poor.

In the process of solving the above technical problem, the inventor finds that in order to quickly realize the adjustment operation of the image size without causing loss of detail in the image, in the adjustment process, the decoration content in the image to be adjusted may be removed, and the size adjustment operation is only performed on background image. Further, after the size adjustment operation on the background image is completed, the decoration content may be added to the adjusted background image to obtain the target image.

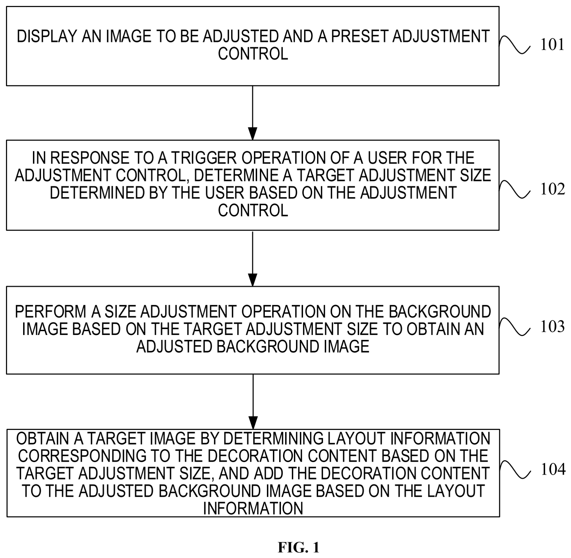

FIG. 1 is a schematic flowchart of a method of adjusting size of an image according to an embodiment of the present disclosure.

Step 101: display an image to be adjusted and a preset adjustment control, wherein the image to be adjusted comprises a background image and a decoration content.

The execution body of this embodiment is an apparatus for adjusting size of an image, which may be coupled to the terminal device, such that an image size adjustment operation can be implemented based on a trigger operation of the user on the terminal device. Alternatively, the apparatus for adjusting size of an image may be further coupled to a server, and the server can be communicatively connected to the terminal device. Therefore, the image size adjustment operation can be implemented based on the image size adjustment request sent by the terminal device, and the terminal device is controlled to display the cropped target image.

In this embodiment, the user may perform an image adjustment operation on the image to be adjusted on the terminal device. In some embodiments, the image to be adjusted may be uploaded by the user in a preset storage path, or may be generated by the terminal device based on the image material uploaded by the user and the decoration content determined by the user, which is not limited in the present disclosure. In some embodiments, the image to be adjusted may comprise a background image and a decoration content. The background image may be composed of at least one layer. The decoration content may comprise text decoration content, pattern decoration content, and the like.

For example, the image to be adjusted may be a poster corresponding to a certain item, and the poster may comprise a background image, text decoration content, pattern decoration content, and the like composed of at least one layer.

In order to implement the image size adjustment operation on the image to be edited, the image to be adjusted and the preset adjustment control may be displayed. Optionally, the image to be adjusted may be displayed in the first display area of the display interface, and the adjustment control may be displayed in the second display area. In some embodiments, the first display area and the second display area may be arranged up and down, arranged left and right, or the second display area may be displayed within the first display area, which is not limited in the present disclosure.

Step 102: in response to a trigger operation of a user for the adjustment control, determine a target adjustment size determined by the user based on the adjustment control.

In this embodiment, after the adjustment control is displayed, the user may perform a trigger operation on the adjustment control. In some embodiments, the trigger operation comprises, but is not limited to, a single-click, double-click, long-press, or drag operation and the like. The user may determine the target adjustment size based on the adjustment control, such that subsequently the size adjustment operation may be performed on the image to be edited based on the target adjustment size.

Step 103: perform a size adjustment operation on the background image based on the target adjustment size to obtain an adjusted background image.

In this embodiment, since the image to be adjusted comprises the background image and the decoration content, performing the size adjustment operation directly on the image to be edited may cause the decoration content to be cropped, thereby affecting image quality.

Therefore, in order to ensure that the adjustment of the image size can be realized without losing the decoration content in the image to be adjusted, the decoration content in the image to be edited may be removed, and the size adjustment operation is performed on the background image based on the target adjustment size to obtain the adjusted background image.

It should be noted that performing the size adjustment operation on the background image based on the target adjustment size comprises, but is not limited to, an adjustment operation such as a cropping operation and a stretching operation and the like.

Step 104: obtain a target image by determining layout information corresponding to the decoration content based on the target adjustment size, and adding the decoration content to the adjusted background image based on the layout information.

In this embodiment, after the size adjustment operation on the background image is completed, the decoration content may be re-added to the adjusted background image. However, after performing the cropping on the background image, the size of the background image changes, and performing the addition of the decoration content according to the original position may exceed the adjusted position of the background image. Therefore, in order to reasonably place the decoration content, the layout information corresponding to the decoration content may be determined according to the target adjustment size, and the decoration content is added to the adjusted background image based on the layout information to obtain the target image.

**In** the method of adjusting size of an image provided in this embodiment, after the target adjustment size is determined, the decoration content on the image to be adjusted is removed, and the size adjustment operation is performed on background image based only on the target adjustment size. After the cropping, the layout information corresponding to the decoration content may be determined according to the target adjustment size, and the decoration content is added to the adjusted background image based on the layout information to obtain the target image. Therefore, on the basis that the decoration content in the image to be adjusted is not lost, the decoration content can have a higher quality layout, and the image quality is improved.

Optionally, on the basis of any one of the foregoing embodiments, step 102 comprises: in response to the trigger operation of the user for the adjustment control, displaying a preset adjustment size generation page, wherein the adjustment size generation page comprises at least one preset adjustment size, and in response to a selection operation of the user for the at least one preset adjustment size in the adjustment size generation page, determining an adjustment size selected by the user as the target adjustment size.

**In** this embodiment, a plurality of adjustment sizes may be preset for the user to select, for example, the adjustment size comprises 1080 * 1080, 1080 * 1920, 940 * 788, and the like.

**In** response to the trigger operation of the user for the adjustment control, a preset adjustment size generation page may be displayed, wherein the adjustment size generation page displays at least one preset adjustment size. The user may perform a selection operation on the adjustment size generation page according to the actual demand. In response to a user's selection operation on any one of the adjustment sizes, the adjustment size selected by the user may be determined as the target adjustment size.

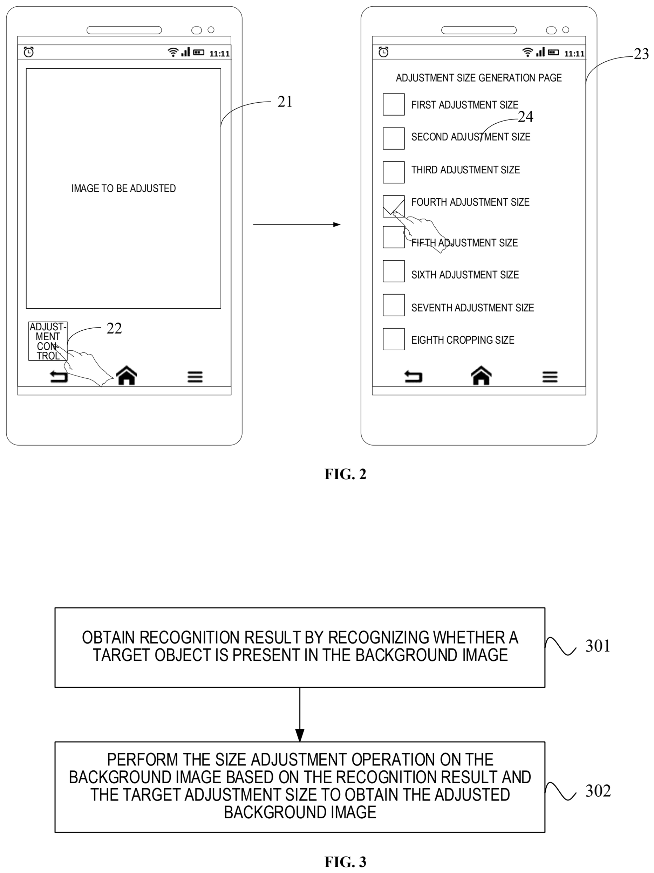

FIG. 2 is a schematic diagram of the interface interaction according to an embodiment of the present disclosure. As shown in FIG. 2, the image to be adjusted 21 and the preset adjustment control 22 may be displayed. In response to the trigger operation of the user for the adjustment control 22, a preset adjustment size generation page 23 may be displayed, and the adjustment size generation page 23 comprises at least one preset adjustment size 24. The user may perform a selection operation for the at least one preset adjustment size 24 according to actual demands, and the adjustment size 24 selected by the user may be determined as the target adjustment size.

According to the method of adjusting size of an image provided by the embodiments, at least one preset adjustment size is displayed in the adjustment size generation page in response to the trigger operation of the user for the adjustment control, such that the user can quickly determine the target adjustment size through a simple trigger operation, and the interaction manner is enriched, and the target adjustment size determination manner is simplified.

Optionally, on the basis of any one of the foregoing embodiments, step 102 comprises: in response to the trigger operation of the user for the adjustment control, displaying a preset adjustment size generation page, wherein the adjustment size generation page comprises an adjustment size creation control, and in response to the trigger operation of the user for the adjustment size creation control, obtaining the target adjustment size input by the user based on the adjustment size creation control.

In this embodiment, the user may customize and generate the target adjustment size according to actual demands. In response to the trigger operation of the user for the adjustment control, a preset adjustment size generation page is displayed, and the adjustment size generation page comprises the adjustment size creation control. In some embodiments, the adjustment size creation control may be a numeric input control. The user may input the customized adjustment size based on the adjustment size creation control, and the adjustment size creation control by the user input the target adjustment size.

According to the method of adjusting size of an image provided in this embodiment, the adjustment size creation control is displayed in the adjustment size generation page in response to the trigger operation of the user for the adjustment control, such that the user can determine the customized target adjustment size based on the adjustment size creation control, causing the size of the adjusted target image is more consistent with the personalized demand of the user.

Optionally, based on any one of the foregoing embodiments, step 102 comprises: in response to the trigger operation of the user for the adjustment control, determining an image parameter corresponding to the image to be adjusted, wherein the image parameter comprises at least one of a background image size, a decoration content quantity, and a decoration content size.

A target layout template matching the image parameter in a plurality of preset image layout templates is determined, wherein the image layout template comprises an image size and a decoration content layout parameter.

An adjustment size corresponding to the target layout template is determined as the target adjustment size.

In this embodiment, a plurality of different image layout templates may be preset, and an image size and a decoration content layout parameter are defined in the image layout template.

After the image to be adjusted is obtained, in response to a trigger operation of the user for the adjustment control, an image parameter corresponding to the image to be adjusted may be determined, wherein the image parameter comprises at least one of a background image size, a decoration content quantity, and a decoration content size. A target layout template matching the image parameters is determined from the plurality of image layout templates based on the image parameters.

For example, the image to be adjusted comprises five decoration contents, and the display position of the decoration content may be determined separately. Based on the quantity and the display position, an image layout template with a same quantity and with a similar display position of images to be adjusted is determined from the plurality of image layout templates as the target layout template.

In order to achieve the automatic determination of the target adjustment size, after the target layout template is determined, the adjustment size corresponding to the target layout template may be determined as the target adjustment size.

According to the method of adjusting size of an image provided by the embodiments, the target layout template is determined based on the image parameters corresponding to the image to be adjusted, and the target adjustment size is determined based on the target layout template, therefore the target adjustment size matching with the image to be adjusted can be automatically determined, and the operation process of image size adjustment is simplified.

FIG. 3 is a schematic flowchart of a method of adjusting size of an image according to yet another embodiment of the present disclosure. On the basis of any of the previous embodiments, as shown in FIG. 3, the step 103 comprises the following step 301 and step 302.

Step 301: obtain a recognition result by recognizing whether a target object is present in the background image.

Step 302: perform the size adjustment operation on the background image based on the recognition result and the target adjustment size to obtain the adjusted background image.

**In** this embodiment, the background image may comprise a target object having significance such as a portrait, a pattern, an identifier, and the like. In order to avoid cropping the target object in the cropping process, resulting in an incomplete background image. Before cropping, whether the background image comprises the target object may be recognized to obtain the recognition result. In some embodiments, the recognition operation on the target object may be implemented through a preset recognition algorithm, for example, the recognition algorithm may be a neural network model capable of recognizing the significance feature. Alternatively, the recognition operation on the target object may be implemented in any manner that is capable of recognizing the significance feature, which is not limited in the present disclosure.

Further, for different recognition results, the size adjustment operation may be performed on the background image according to the recognition result and the target adjustment size to obtain the adjusted background image.

**In** the method of adjusting size of an image provided in this embodiment, whether the background image comprises the target object is recognized through a preset recognition algorithm, to obtain the recognition result. The background image size adjustment operation is performed based on the recognition result, such that the loss of the part of the image of the target object in the cropping process can be avoided, and the image quality is improved.

Further, on the basis of any one of the foregoing embodiments, step 302 comprises: if the recognition result is that the target object is present in the background image, performing the size adjustment operation on the background image around the target object based on the target adjustment size to obtain the adjusted background image, wherein the adjusted background image comprises at least a part of the target object, and if the recognition result is that the target object is absent from the background image, performing a random size adjustment operation on the background image based on the target adjustment size to obtain the adjusted background image.

**In** this embodiment, if it is detected that the background image comprises the target object, in order to avoid cropping the target object in the cropping process, causing the background image to be incomplete, in the cropping process, the size adjustment operation may be performed on the background image around the target object according to the target adjustment size, to obtain an adjusted background image, wherein the adjusted background image comprises at least part of the target object.

Using an actual application as an example, the target object may be a portrait. In the cropping process, the size adjustment operation may be performed around the position of the portrait. If the target adjustment size is relatively small, in the process of performing the size adjustment operation around the position of the portrait, the body part of the portrait may be cropped to retain the face area.

Optionally, if the recognition result is that the background image does not comprise the target object, cropping of the effective content is not caused in the cropping process. Therefore, the random size adjustment operation may be performed on the background image according to the target adjustment size to obtain the adjusted background image.

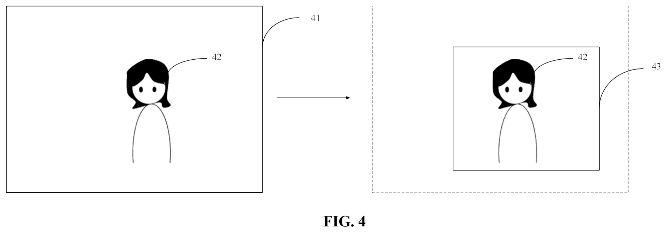

FIG. 4 is a schematic diagram of image cropping according to an embodiment of the present disclosure, as shown in FIG. 4, the background image 41 may comprise a target object 42, and in a cropping process, a size adjustment operation may be performed around the target object 42 according to a target adjustment size to obtain an adjusted background image 43, wherein the adjusted background image 43 comprises at least part of the target object 42.

According to the method of adjusting size of an image provided by the embodiment, the size adjustment operation is performed around the target image when the target object is present in the background image, such that the loss of a part of the image of the target object in the cropping process can be avoided, and the image quality is improved.

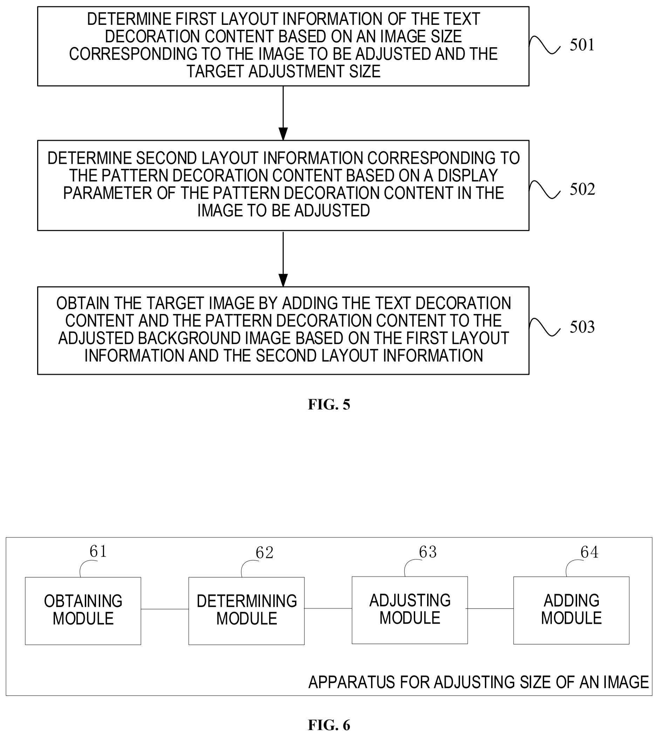

FIG. 5 is a schematic flowchart of a method of adjusting size of an image according to yet another embodiment of the present disclosure. On the basis of any of the foregoing embodiments, the decoration content comprises the text decoration content and the pattern decoration content. As shown in FIG. 5, step 104 comprises the following step 501, step 502, and step 503.

Step 501: determine first layout information of the text decoration content based on an image size corresponding to the image to be adjusted and the target adjustment size.

Step 502: determine second layout information corresponding to the pattern decoration content based on a display parameter of the pattern decoration content in the image to be adjusted.

Step 503: obtain the target image by adding the text decoration content and the pattern decoration content to the adjusted background image based on the first layout information and the second layout information.

In this embodiment, the decoration content comprises the text decoration content and the pattern decoration content. Still taking the image to be edited is a poster of an item as an example, the text decoration content may be a text description corresponding to the item, and the pattern decoration content may be a relatively beautiful small pattern or the like.

In the process of placing the decoration content in the adjusted background image, in order to make the overall placement result more aesthetically pleasing, the first layout information of the text decoration content and the second layout information corresponding to the pattern decoration content may be determined separately.

Optionally, the image cropping process may cause the image to be edited to change from a horizontal layout to a vertical layout, or the vertical layout may be changed to a horizontal layout, and a change in layout may result in a change in the text layout. Therefore, the first layout information of the text decoration content may be determined according to the image size corresponding to the image to be adjusted and the target adjustment size.

Further, for the pattern decoration content, the determination of the second layout information may be performed according to the display parameter in the image to be edited, such that the display effect of the pattern decoration content is unchanged in the target image and in the image to be edited. Therefore, the text decoration content and the pattern decoration content may be respectively added to the adjusted background image based on the first layout information and the second layout information to obtain the target image.

According to the method of adjusting size of an image provided by the embodiment, the first layout information of the text decoration content is determined based on the image size corresponding to the image to be adjusted and the target adjustment size, and the second layout information corresponding to the pattern decoration content is determined according to the display parameter of the pattern decoration content in the image to be adjusted, such that the display effect of the decoration content in the target image can be improved.

Further, on the basis of any one of the above embodiments, step 501 comprises: for a horizontally and/or vertically arranged text decoration content in the image to be adjusted, if a width of the image size corresponding to the image to be adjusted is greater than a height of the image size and a width of the target adjustment size is less than a height of the target adjustment size, determining that the first layout information of the text decoration content is a horizontal layout; if the height of the image size corresponding to the image to be adjusted is greater than the width of the image size and the height of the target adjustment size is less than the width of the target adjustment size, determining that the first layout information of the text decoration content is a vertical layout, and determining the first layout information of the text decoration content as a centered layout for the text decoration content displayed centered in the image to be adjusted.

**In** this embodiment, in order to make the layout of the text decoration content more aesthetically pleasing, for the text decoration content arranged horizontally and / or vertically in the image to be adjusted, if the width of the image size corresponding to the image to be adjusted is greater than the height and the width of the target adjustment size is less than the height, it is determined that the first layout information of the text decoration content is the horizontal layout. If the height of the image size corresponding to the image to be adjusted is greater than the width and the height of the target adjustment size is less than the width, it is determined that the first layout information of the text decoration content is the vertical layout.

For example, when the image to be adjusted of the portrait version is switched to the target image of the landscape version, the arrangement manner of the text decoration content is adjusted to be arranged left and right. When the image to be adjusted of the landscape version is switched to the target image of the portrait version, the arrangement manner of the text decoration content is adjusted to be formatted up and down.

Optionally, the first layout information of the text decoration content is determined to be a centered layout for the text decoration content displayed in the image to be adjusted. For example, the cropping of the image does not have a large impact on the centered text decoration content, and thus, the centered pure text may still be in the centered position.

**In** the method of adjusting size of an image provided in this embodiment, when the image to be adjusted of the portrait version is switched to the target image of the landscape version, the arrangement manner of the text decoration content is adjusted to be arranged left and right. When the image to be adjusted of the landscape version is switched to the target image of the portrait version, the arrangement manner of the text decoration content is adjusted to be formatted up and down. The centered pure text is still in the centered position, such that the text decoration content in the target image is more aesthetically pleasing, and the image quality is improved.

Further, on the basis of any one of the above embodiments, step 502 comprises: determining position information of the pattern decoration content in the image to be adjusted; if the pattern decoration content is within a preset target area, controlling the text decoration content to still be within the preset target area in the adjusted background image; if the pattern decoration content is outside the preset target area and overlapping with a further decoration content, determining mask information between the pattern decoration content and the further decoration content in the image to be adjusted, and determining a display position of the pattern apparatus content in the adjusted background image based on the mask information and the display position of the further decoration content; if the pattern decoration content is outside the preset target area and non-overlapping with a further decoration content, determining a blank area in the image to be adjusted, and controlling the pattern decoration content to be displayed within the blank area to obtain the second layout information.

**In** this embodiment, for the pattern decoration content, the determination of the second layout information may be performed according to the display parameter in the image to be edited, such that the display effect of the pattern decoration content in the target image and the image to be edited is unchanged.

Optionally, position information of the pattern decoration content in the image to be adjusted may be determined. If the pattern decoration content is within the preset target area, the text decoration content is controlled to be still within the preset target area in the adjusted background image. In some embodiments, the target area may be an edge or corner area. For example, the pattern decoration content located at the edge or corner is still placed at the edge or corner position after the cropping of the background image is completed, such that the display effect of the pattern decoration content is unchanged in the target image and in the image to be edited.

Optionally, if the pattern decoration content is outside the preset target area and overlaps with the further decoration content, the mask information between the pattern decoration content and the further decoration content in the image to be adjusted is determined, and the display position of the pattern apparatus content in the adjusted background image is determined according to the mask information and the display position of the further decoration content. For example, if the pattern decoration content is located on the target object in the image to be edited, and the target object is blocked, after the background image is cropped, the pattern decoration content may still be placed on the target object to block the target object.

Optionally, if the pattern decoration content is outside the preset target area and non-overlapping with the further decoration content, the blank region in the image to be adjusted is determined, and the pattern decoration content is controlled to be displayed in the blank area, and the second layout information is obtained. For the pattern decoration content in the blank area in the image to be edited, after the background image is cropped, the pattern decoration content may still be placed in the blank area of the adjusted background image.

According to the method of adjusting size of an image provided by the embodiments, by continuously placing the pattern decoration content of the edge or corner at the edge or corner position according to the relative position, the pattern decoration content overlapped with the further decoration content continues to overlap with the further decoration content. The pattern decoration content which is outside the preset target area and non-overlapping with the further decoration content if filled into the blank area of the new size according to the original position, such that the pattern decoration content in the target image is more aesthetically pleasing, and the image quality is improved.

FIG. 6 is a schematic structural diagram of an apparatus for adjusting size of an image provided by an embodiment of the present disclosure. As shown in FIG. 6, the apparatus comprises a display module 61, a determining module 62, an adjusting module 63, and an adding module 64. In some embodiments, the display module 61 is configured to display an image to be adjusted and a preset adjustment control, wherein the image to be adjusted comprises a background image and a decoration content. A determining module 62, configured to, in response to a trigger operation of a user for the adjustment control, determine a target adjustment size determined by the user based on the adjustment control. An adjusting module 63, configured to perform a size adjustment operation on the background image based on the target adjustment size to obtain an adjusted background image. An adding module 64, configured to obtain a target image by determining layout information corresponding to the decoration content based on the target adjustment size, and adding the decoration content to the adjusted background image based on the layout information.

Further, on the basis of any one of the foregoing embodiments, the determining module is configured to: in response to the trigger operation of the user for the adjustment control, display a preset adjustment size generation page, wherein the adjustment size generation page comprises at least one preset adjustment size; and in response to a selection operation of the user for the at least one preset adjustment size in the adjustment size generation page, determine an adjustment size selected by the user as the target adjustment size.

Further, on the basis of any one of the foregoing embodiments, the determining module is configured to: in response to the trigger operation of the user for the adjustment control, display a preset adjustment size generation page, wherein the adjustment size generation page comprises an adjustment size creation control; and in response to the trigger operation of the user for the adjustment size creation control, obtain the target adjustment size input by the user based on the adjustment size creation control.

Further, on the basis of any one of the foregoing embodiments, the determining module is configured to: in response to the trigger operation of the user for the adjustment control, determine an image parameter corresponding to the image to be adjusted, wherein the image parameter comprises at least one of a background image size, a decoration content quantity, and a decoration content size; determine a target layout template matching the image parameter among a plurality of preset image layout templates, wherein the image layout template comprises an image size and a decoration content layout parameter; and determine an adjustment size corresponding to the target layout template as the target adjustment size.

Further, on the basis of any one of the above embodiments, the adjusting module is configured to: obtain a recognition result by recognizing whether a target object is present in the background image; and perform the size adjustment operation on the background image based on the recognition result and the target adjustment size to obtain the adjusted background image.

Further, on the basis of any one of the above embodiments, the adjusting module is configured to: if the recognition result is that the target object is present in the background image, perform the size adjustment operation on the background image around the target object based on the target adjustment size to obtain the adjusted background image, wherein the adjusted background image comprises at least a part of the target object; and if the recognition result is that the target object is absent from the background image, perform a random size adjustment operation on the background image based on the target adjustment size to obtain the adjusted background image.

Further, on the basis of any one of the above embodiments, the decoration content comprises a text decoration content and a pattern decoration content. The adding module is configured to: determine first layout information of the text decoration content based on an image size corresponding to the image to be adjusted and the target adjustment size; determine second layout information corresponding to the pattern decoration content based on a display parameter of the pattern decoration content in the image to be adjusted; and obtain the target image by adding the text decoration content and the pattern decoration content to the adjusted background image based on the first layout information and the second layout information.

Further, on the basis of any one of the above embodiments, the adding module is configured to: for a horizontally and/or vertically arranged text decoration content in the image to be adjusted, if a width of the image size corresponding to the image to be adjusted is greater than a height of the image size and a width of the target adjustment size is less than a height of the target adjustment size, determine that the first layout information of the text decoration content is a horizontal layout; if the height of the image size corresponding to the image to be adjusted is greater than the width of the image size and the height of the target adjustment size is less than the width of the target adjustment size, determine that the first layout information of the text decoration content is a vertical layout; and determine the first layout information of the text decoration content as a centered layout for the text decoration content displayed centered in the image to be adjusted.

Further, on the basis of any one of the above embodiments, the adding module is configured to: determine position information of the pattern decoration content in the image to be adjusted; if the pattern decoration content is within a preset target area, control the text decoration content to still be within the preset target area in the adjusted background image; if the pattern decoration content is outside the preset target area and overlapping with a further decoration content, determine mask information between the pattern decoration content and further decoration content in the image to be adjusted, and determining a display position of the pattern apparatus content in the adjusted background image based on the mask information and the display position of the further decoration content; and if the pattern decoration content is outside the preset target area and non-overlapping with a further decoration content, determine a blank area in the image to be adjusted, and control the pattern decoration content to be displayed within the blank area to obtain the second layout information.

The device provided in this embodiment may be configured to perform the technical solutions in the foregoing method embodiments, and implementation principles and technical effects thereof are similar, and details are not described herein again in this embodiment.

**In** order to implement the foregoing embodiments, an embodiment of the present disclosure further provides an electronic device, comprising: a processor and a memory.

The memory stores computer-executable instructions.

The processor executes the computer-executable instructions stored in the memory, such that the processor executes the method of adjusting size of an image according to any one of the above embodiments.

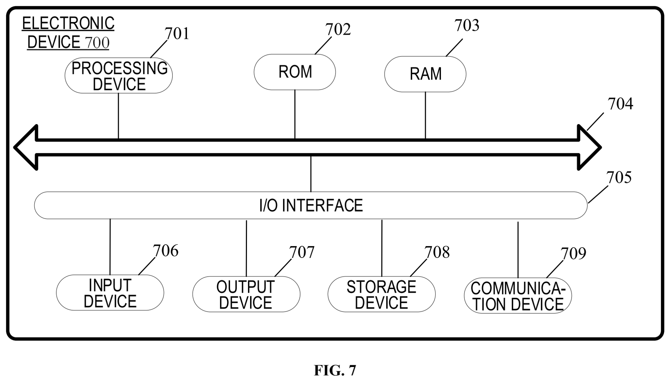

**FIG.** 7 is a schematic structural diagram of an electronic device 700 according to an embodiment of the present disclosure. As shown in FIG. 7, the electronic device 700 may be a terminal device or a server. In some embodiments, the terminal device may comprise, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal) and the like, and a fixed terminal such as a digital TV, a desktop computer, or the like. The electronic device shown in FIG. 7 is merely an example, and should not impose any limitation on the functions and scope of use of the embodiments of the present disclosure.

As shown in FIG. 7, the electronic device 700 may comprise a processing device (for example, a central processing unit, a graphics processor, etc.) 701, which may perform various appropriate actions and processing according to a program stored in a read only memory (ROM) 702 or a program loaded into a random access memory (RAM) 703 from a storage device 708. In the RAM 703, various programs and data required by the operation of the electronic device 700 are also stored. The processing device 701, the ROM 702, and the RAM 703 are connected to each other through a bus 704. Input / output (I / O) interface 705 is also connected to bus 704.

Generally, the following apparatus may be connected to the I / O interface 705:comprising an input device 706, for example, a touch screen, a touch pad, a keyboard, a mouse, a camera, a microphone, an accelerometer, a gyroscope, etc. ; an output device 707 including, for example, a liquid crystal display (LCD), a speaker, a vibrator, etc. ; a storage device 708 comprising, for example, a magnetic tape, a hard disk, etc. ; and a communication device 709. The communication device 709 may allow the electronic device 700 to communicate wirelessly or wired with other devices to exchange data. While FIG. 7 shows an electronic device 700 having various apparatuses, it should be understood that it is not required to implement or have all illustrated apparatuses. More or fewer apparatuses may alternatively be implemented or provided.

**In** particular, according to an embodiment of the present disclosure, the process described above with reference to the flowchart may be implemented as a computer software program. For example, embodiments of the present disclosure include a computer program product comprising a computer program embodied on a computer readable medium, the computer program comprising program code for performing the method shown in the flowchart. In such embodiments, the computer program may be downloaded and installed from the network through the communication device 709, or installed from the storage device 708, or from the ROM 702. When the computer program is executed by the processing device 701, the foregoing functions defined in the method of the embodiments of the present disclosure are performed.

**It** should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, apparatus, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

**In** order to implement the foregoing embodiments, an embodiment of the present disclosure further provides a computer-readable storage medium, where the computer-readable storage medium stores a computer-executable instruction, and when the processor executes the computer-executable instruction, the method of adjusting size of an image according to any one of the foregoing embodiments is implemented.

**In** order to implement the foregoing embodiments, an embodiment of the present disclosure further provides a computer program product, including a computer program, where the computer program, when executed by a processor, implements the method of adjusting size of an image according to any one of the foregoing embodiments.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object oriented programming languages, such as Java, Smalltalk, C ++, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and / or flowcharts, as well as combinations of blocks in the block diagrams and / or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. In some embodiments, the name of the unit does not constitute a limitation on the unit itself in some cases, for example, the first obtaining unit may be further described as "obtaining units of at least two Internet Protocol addresses".

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

**In** the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

The above description is merely an illustration of the preferred embodiments of the present disclosure and the principles of the applied technology. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and / or methodological acts, it is to be understood that the subject matter defined in the appended claims is not necessarily limited to the specific features or acts described above. Rather, the specific features and acts described above are merely exemplary forms of implementing the claims.

## Claims

1. A method of adjusting size of an image, comprising:
displaying an image to be adjusted and a preset adjustment control, wherein the image to be adjusted comprises a background image and a decoration content;
in response to a trigger operation of a user for the adjustment control, determining a target adjustment size determined by the user based on the adjustment control;
performing a size adjustment operation on the background image based on the target adjustment size to obtain an adjusted background image; and
obtaining a target image by determining layout information corresponding to the decoration content based on the target adjustment size, and adding the decoration content to the adjusted background image based on the layout information.

2. The method of claim 1, wherein in response to the trigger operation of the user for the adjustment control, determining the target adjustment size determined by the user based on the adjustment control comprises:
in response to the trigger operation of the user for the adjustment control, displaying a preset adjustment size generation page, wherein the adjustment size generation page comprises at least one preset adjustment size; and
in response to a selection operation of the user for the at least one preset adjustment size in the adjustment size generation page, determining an adjustment size selected by the user as the target adjustment size.

3. The method of claim 1, wherein in response to the trigger operation of the user for the adjustment control, determining the target adjustment size determined by the user based on the adjustment control comprises:
in response to the trigger operation of the user for the adjustment control, displaying a preset adjustment size generation page, wherein the adjustment size generation page comprises an adjustment size creation control; and
in response to the trigger operation of the user for the adjustment size creation control, obtaining the target adjustment size input by the user based on the adjustment size creation control.

4. The method of claim 1, wherein in response to the trigger operation of the user for the adjustment control, determining the target adjustment size determined by the user based on the adjustment control comprises:
in response to the trigger operation of the user for the adjustment control, determining an image parameter corresponding to the image to be adjusted, wherein the image parameter comprises at least one of a background image size, a decoration content quantity, and a decoration content size;
determining a target layout template matching the image parameter among a plurality of preset image layout templates, wherein the image layout template comprises an image size and a decoration content layout parameter; and
determining an adjustment size corresponding to the target layout template as the target adjustment size.

5. The method of claim 1, wherein performing the size adjustment operation on the background image based on the target adjustment size to obtain the adjusted background image comprises:
obtaining a recognition result by recognizing whether a target object is present in the background image; and
performing the size adjustment operation on the background image based on the recognition result and the target adjustment size to obtain the adjusted background image.

6. The method of claim 5, wherein performing the size adjustment operation on the background image based on the recognition result and the target adjustment size to obtain the adjusted background image comprises:
if the recognition result is that the target object is present in the background image, performing the size adjustment operation on the background image around the target object based on the target adjustment size to obtain the adjusted background image, wherein the adjusted background image comprises at least a part of the target object; and
if the recognition result is that the target object is absent from the background image, performing a random size adjustment operation on the background image based on the target adjustment size to obtain the adjusted background image.

7. The method of any of claims 1-6, wherein the decoration content comprises a text decoration content and a pattern decoration content; and
wherein obtaining the target image by determining the layout information corresponding to the decoration content based on the target adjustment size, and adding the decoration content to the adjusted background image based on the layout information comprises:
determining first layout information of the text decoration content based on an image size corresponding to the image to be adjusted and the target adjustment size;
determining second layout information corresponding to the pattern decoration content based on a display parameter of the pattern decoration content in the image to be adjusted; and
obtaining the target image by adding the text decoration content and the pattern decoration content to the adjusted background image based on the first layout information and the second layout information.

8. The method of claim 7, wherein determining the first layout information of the text decoration content based on the image size corresponding to the image to be adjusted and the target adjustment size comprises:
for a horizontally and/or vertically arranged text decoration content in the image to be adjusted, if a width of the image size corresponding to the image to be adjusted is greater than a height of the image size and a width of the target adjustment size is less than a height of the target adjustment size, determining that the first layout information of the text decoration content is a horizontal layout; if the height of the image size corresponding to the image to be adjusted is greater than the width of the image size and the height of the target adjustment size is less than the width of the target adjustment size, determining that the first layout information of the text decoration content is a vertical layout; and
determining the first layout information of the text decoration content as a centered layout for the text decoration content displayed centered in the image to be adjusted.

9. The method of claim 7, wherein determining the second layout information corresponding to the pattern decoration content based on the display parameter of the pattern decoration content in the image to be adjusted comprises:
determining position information of the pattern decoration content in the image to be adjusted;
if the pattern decoration content is within a preset target area, controlling the text decoration content to still be within the preset target area in the adjusted background image;
if the pattern decoration content is outside the preset target area and overlapping with a further decoration content, determining mask information between the pattern decoration content and the further decoration content in the image to be adjusted, and determining a display position of the pattern apparatus content in the adjusted background image based on the mask information and the display position of the further decoration content; and
if the pattern decoration content is outside the preset target area and non-overlapping with a further decoration content, determining a blank area in the image to be adjusted, and controlling the pattern decoration content to be displayed within the blank area to obtain the second layout information.

10. An apparatus for adjusting size of an image, comprising:
a display module configured to display an image to be adjusted and a preset adjustment control, wherein the image to be adjusted comprises a background image and a decoration content ;
a determining module configured to, in response to a trigger operation of a user for the adjustment control, determine a target adjustment size determined by the user based on the adjustment control; and
an adjusting module configured to perform a size adjustment operation on the background image based on the target adjustment size to obtain an adjusted background image; and
an adding module configured to obtain a target image by determining layout information corresponding to the decoration content based on the target adjustment size, and adding the decoration content to the adjusted background image based on the layout information.

11. An electronic device, comprising: a processor and a memory;
the memory storing computer executable instructions;
the processor executing the computer-executable instructions stored in the memory, such that the processor executes the method of adjusting size of an image of any of claims 1 to 9.

12. A computer-readable storage medium storing computer-executable instructions, wherein the computer-executable instructions, when exetuced by a processor, implement the method of adjusting size of an image of any of claims 1 to 9.

13. A computer program product, comprising a computer program, wherein the computer program, when executed by a processor, implements the method of adjusting size of an image of any of claims 1 to 9.
